# FASCICULE DE BREVET EUROPEEN

(11) **EP 0 792 718 B1**
(45) Date de publication et mention de la délivrance du brevet: **11.06.2003**
(21) Numéro de dépôt: 97400167.9
(22) Date de dépôt: 24.01.1997
(51) Int. Cl.: B23P 19/02, B23P 15/26, B21D 22/10, F28D 7/02

(54) **Procédé de fabrication d'un échangeur thermique**
Verfahren zur Herstellung eines Wärmeaustauschers
Process for manufacturing a heat exchanger

(30) Priorité: 28.02.1996 FR 9602503; 14.06.1996 FR 9607439
(43) Date de publication de la demande: 03.09.1997
(73) Titulaire: MOTEURS LEROY-SOMER, 16015 Angouleme Cédex (FR)
(72) Inventeur: Coupart, Eric, 16000 Angouleme (FR); Lamaison, Guy, 16120 Chateauneuf (FR); Galais, Michel, 16400 Puymoyen, La Couronne (FR)
(74) Mandataire: Tanty, François

(56) Documents cités:
- EP-A- 0 631 365
- CH-A- 538 661
- DE-A- 3 735 076

## Description

L'invention concerne un procédé de fabrication d'un échangeur thermique, notamment d'un carter de refroidissement pour appareil électrique tel qu'un moteur électrique ou un générateur.

Elle concerne également un outillage pour la mise en oeuvre du procédé selon l'invention, et une utilisation du procédé selon l'invention pour la fablication d'une machine électrique tournante.

Un procédé généralement utilisé pour la réalisation d'un échangeur thermique du type carter de refroidissement comportant :
- une virole intérieure thermiquement conductrice et destinée à entourer l'appareil électrique ;
- une enceinte extérieure adjacente à la surface extérieure de la virole intérieure, et comportant une entrée d'alimentation et une sortie d'évacuation pour un fluide de refroidissement ; et
- un passage pour le fluide de refroidissement situé entre l'entrée et la sortie ;
consiste à emmancher à force l'enceinte extérieure autour de la virole. Entre ces deux pièces circule le fluide permettant l'échange des calories entre la machine tournante et l'extérieur.

EP 0 631 365 A decrit un tel procédé, conformément au préambule de la revendication 1.

Un des objets de la présente invention est de pouvoir optimiser l'échange thermique par convexion entre le fluide et les parois avec lesquelles il est en contact. Pour cela, il est nécessaire d'utiliser des parois les plus fines possibles.

Un autre objet de la présente invention est de pouvoir déformer la paroi de l'enceinte extérieure pour pouvoir créer un passage pour le fluide avec un profil déterminé. Ceci nécessite également d'avoir une paroi suffisamment mince pour pouvoir supporter une déformation plastique.

Dans ces conditions, le procédé qui vient d'être cité ne peut plus s'appliquer car les parois de l'enceinte extérieure d'épaisseur fine ne supportent pas de force axiale.

Le but de la présente invention est de palier entre autre l'inconvénient précité.

A cet effet, l'invention a pour objet un procédé de fabrication d'un échangeur thermique tel que défini à la revendication 1.

Pour obtenir une enceinte extérieure de même profil que le profil intérieur du moule, il consiste à déformer l'enceinte extérieure sous l'action d'une pression uniformément répartie sur la face interne de l'enceinte extérieure pour lui donner le profil déterminé par le profil interne du moule enserrant l'enceinte extérieure.

Pour cela, il consiste notamment à appliquer provisoirement contre la face intérieure de l'enceinte, un élément en matériau expansible, de volume initial déterminé, suffisamment rigide pour pouvoir déformer l'enceinte extérieure, et suffisamment élastique pour pouvoir subir une déformation plastique sous l'action de la pression exercée uniformément à l'intérieur de l'élément ; l'élément reprenant son volume initial quand la pression n'est plus exercée à l'intérieur de l'élément.

Le procédé consiste en outre à utiliser un même outillage pour la déformation de l'enceinte extérieure et pour l'emmanchement à force de la virole à l'intérieur de l'enceinte extérieure.

Un tel outillage est défini à la revendication 5, et comporte un moule formé de deux demi-matrices dont les faces latérales intérieures présentent un profil déterminé complémentaire de celui à l'enceinte extérieure, et une pièce rapportée serrée sur l'extérieur du moule épousant la forme extérieure du moule et ouverte à au moins une de ses extrémités.

Le moule a une forme extérieure par exemple tronconique et est recouvert d'une cloche comportant un évidement de forme complémentaire à celle du moule, permettant par coulissement de la cloche sur le moule de bloquer serrées les deux demi-matrices du moule autour de l'enceinte extérieure.

Un autre objet de l'invention est l'utilisation du procédé précité pour la fabrication d' une machine électrique tournante telle que définie dans les revendications 7 à 27.

L'enceinte extérieure se présente sous la forme d'une pluralité d'ondulations délimitant, avec la virole intérieure, ledit passage, le fluide de refroidissement étant susceptible d'être en contact thermique avec la virole intérieure.

Ainsi le fluide de refroidissement est directement en contact avec la virole intérieure et améliore ainsi la surface d'échange thermique et donc le refroidissement de l'appareil électrique.

Dans le cas où la virole est une pièce de révolution, les ondulations peuvent être telles que le passage s'étend dans un plan sensiblement perpendiculaire à l'axe de révolution de la virole.

Si la virole est de forme sensiblement cylindrique, le passage créé autour de la virole peut être de forme hélicoïdale.

Ainsi, le passage s'étend sur toute la surface de la virole et améliore encore cette surface d'échange thermique.

Suivant un mode de réalisation, on peut prévoir de ménager les ondulations de telle sorte que l'entrée et la sortie de fluide se trouvent sensiblement du même côté.

Ainsi, les ondulations sont ménagées de manière à créer un passage à deux sections sensiblement parallèles communiquant l'une avec l'autre à l'une de leurs extrémités de sorte que l'entrée de fluide et la sortie de fluide se trouvent sensiblement vers la même autre extrémité libre opposée desdites sections.

Ainsi, le fluide de refroidissement circule dans un premier sens dans la première section, et dans un second sens, dans la seconde section, de sorte que l'on obtient une température sur l'ensemble de la virole sensiblement constante.

Un des avantages de la présente invention est de pouvoir ajuster serrées deux pièces l'une dans l'autre dont les parois minces ne supportent pas d'effort axial, tout en préservant l'enceinte extérieure de toutes déformations non désirées pendant l'opération d'emmanchement.

D'autres avantages et caractéristiques de la présente invention apparaîtront plus clairement à la lecture de la description qui suit et des figures annexées qui représentent :
- la figure 1, une vue en coupe transversale de l'emmanchement de la virole à l'intérieur de l'enceinte extérieure maintenue à l'intérieur d'un outillage, suivant le procédé selon l'invention ;
- les figures 2a et 2b, les vues en élévation respectives aux deux demi-matrices de l'outillage utilisé dans le procédé selon l'invention ;
- la figure 3, une vue en coupe transversale d'une cloche de l'outillage utilisé dans le procédé selon l'invention ;
- la figure 4, une vue en coupe transversale d'un premier mode de réalisation d'un carter réalisé suivant le procédé selon l'invention ;
- la figure 5, une vue en perspective d'une enceinte extérieure d'un deuxième mode de réalisation d'un carter obtenu suivant le procédé selon l'invention ;
- la figure 6, une vue en coupe transversale du deuxième mode de réalisation de la figure 5 ;
- la figure 7, une vue partielle agrandie des ondulations de l'enceinte extérieure représentées à la figure 6 ; et
- les figures 8a et 8b, les vues en élévation respectives aux deux demi-matrices utilisées pour la fabrication du deuxième mode de réalisation d'un carter selon l'invention.

Sur ces figures, les éléments homologues sont désignés par le même repère.

Le procédé selon l'invention est décrit ci-après en application à la réalisation d'un carter de refroidissement pour appareil électrique, par exemple un moteur électrique destiné à être utilisé dans des conditions où l'on ne souhaite pas de mouvement d'air, ou lorsque le moteur est dans une enceinte complètement fermée et qu'il doit être refroidi à distance.

Cela étant, l'invention s'applique plus généralement au refroidissement par fluide de tout type d'appareil électrique.

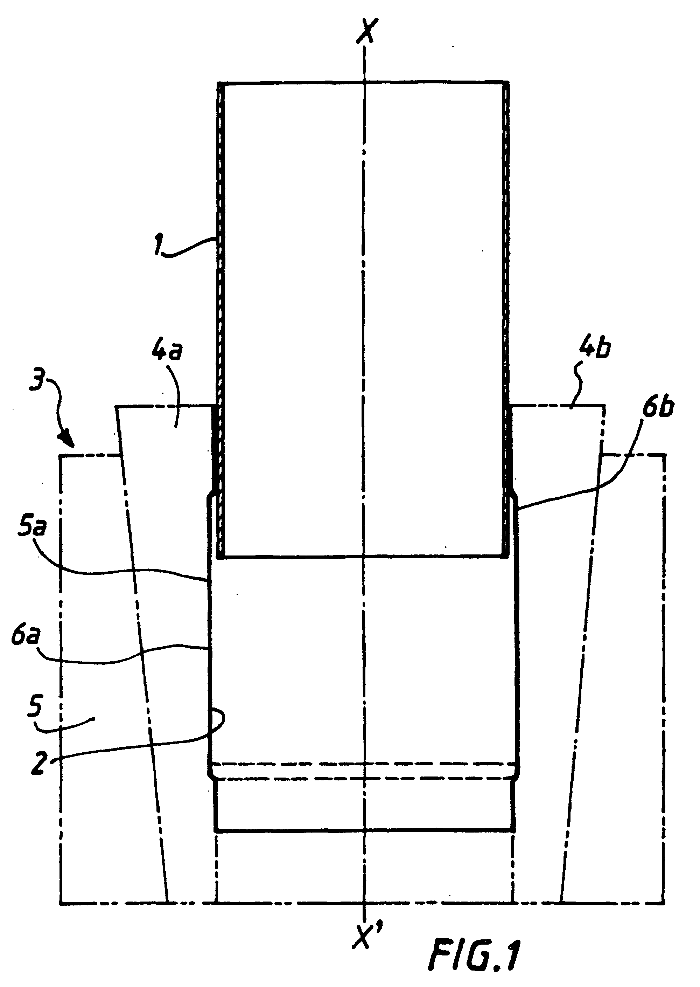

La figure 1 illustre par une coupe transversale le procédé de fabrication par emmanchement d'un carter du type précédemment décrit comportant une virole 1 et une enceinte extérieure 2. Il utilise un outillage 3 comportant un moule formé de deux demi-matrices 4a, 4b, symétriques par rapport à l'axe X-X' longitudinal passant par le centre du carter. L'outillage comporte également une cloche 5 venant maintenir les deux demi-matrices 4a, 4b du moule en position autour de l'enceinte extérieure 2.

Les deux demi-matrices 4a, 4b constituent une fois fixées l'une à l'autre un évidement destiné à recevoir l'élément de base destiné à former l'enceinte extérieure 2.

Les matrices 4a, 4b présentent respectivement sur leur face intérieure un profil déterminé de forme complémentaire à celui que l'on souhaite obtenir sur l'enceinte extérieure 2.

Une fois les deux demi-matrices 4a, 4b maintenues serrées à l'intérieur de la cloche 5, l'élément de base destiné à former l'enceinte extérieure 2 est positionné dans l'évidement.

Une fois l'enceinte extérieure 2 ajustée à l'intérieure des deux demi-matrices 4a, 4b, une pression uniformément réparties sur la face interne de l'enceinte 2 vient déformer la paroi latérale de l'enceinte 2 suivant le profil déterminé par le profil intérieur 6a, 6b des deux demi-matrices 4a, 4b. Un moyen permettant d'exercer cette pression uniformément répartie consiste par exemple à introduire à l'intérieur de l'enceinte extérieure 2 placée dans l'évidement formé par les deux demi-matrices 4a, 4b, un matériau expansible, de volume initial déterminé, suffisamment rigide pour pouvoir déformer l'enceinte extérieure 2 sous l'effet d'une pression exercée à l'intérieur du matériau et suffisamment élastique pour pouvoir se déformer sous l'action de la pression et pour reprendre son volume initial quand la pression n'est plus exercée, permettant ainsi de retirer le matériau après déformation.

Sous l'effet de la pression du matériau contre la paroi interne de l'enceinte extérieure 2, celle-ci vient se déformer en épousant le profil 6a, 6b déterminé par les faces latérales internes des deux demi-matrices 4a, 4b.

Une fois l'enceinte extérieure 2 déformée, le matériau est retiré de l'évidement et l'enceinte extérieure 2 reste maintenue par les deux demi-matrices 4a, 4b dans son état déformé. Le matériau utilisé pour la déformation de l'enceinte extérieure 2 est par exemple un élastomère dont l'expansion sous haute pression vient déformer le métal selon les formes des faces intérieures des matrices 4a, 4b.

Une fois le matériau retiré de l'évidement formé par l'intérieur de l'enceinte extérieure 2, la virole 1 est poussée axialement à l'intérieur de l'enceinte extérieure 2, par exemple par le mandrin de la presse utilisée pour l'emmanchement, non représenté.

Pendant l'emmanchement de la virole 1 à l'intérieur de l'enceinte extérieure 2, l'enceinte extérieure 2 déformée est maintenue dans les deux demi-matrices 4a, 4b. Les deux demi-matrices 4a, 4b étant elles-mêmes maintenues à l'intérieur de la cloche 5. Ainsi, en utilisant un tel outillage 3, la virole 1 intérieure est emmanchée dans l'enceinte extérieure 2 par un montage à force sous presse sans déformer l'enceinte extérieure 2, malgré le fait qu'elle ait une épaisseur relativement faible, ne tolérant donc aucun effort axial à l'état libre.

L'étape de déformation et d'emmanchement utilisent un même outillage 3 comportant les deux matrices 4a, 4b et la cloche 5, qui ont pour fonction de maintenir l'enceinte extérieure 2 pendant l'opération d'emmanchement de la virole 1.

L'ajustement de l'enceinte extérieure 2 autour de la virole 1 est ainsi effectué sans jeu grâce au montage avec serrage obtenu par la méthode d'emmanchement selon l'invention.

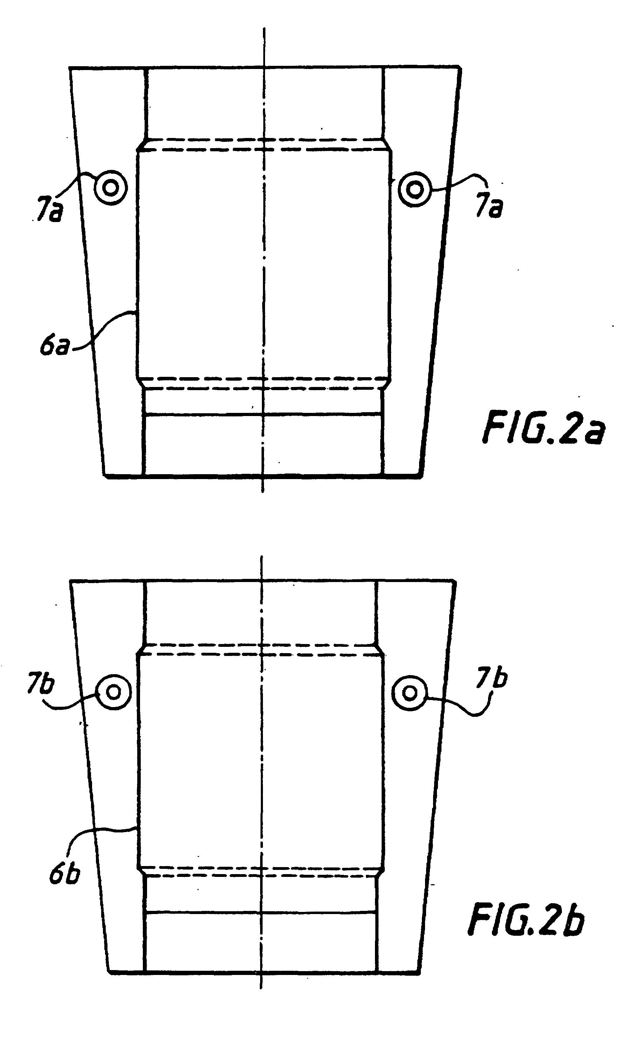

Les figures 2a et 2b illustrent respectivement les deux demi-matrices 4a, 4b de l'outillage 3 représenté à la figure 1. Ces deux demi-matrices 4a, 4b ont une forme tronconique et sont assemblées l'une à l'autre par l'intermédiaire de moyens de guidage 7a, 7b, percés symétriquement par rapport à l'axe longitudinal XX' des demi-matrice 4a, 4b.

Dans ce mode de réalisation, le profil intérieur 6a, 6b des deux demi-matrices 4a, 4b forme un cylindre dont le diamètre est déterminé pour créer un espace entre le diamètre de la virole 1 et le diamètre intérieur de l'enceinte extérieure 2 après déformation et emmanchement ; l'espace ainsi formé permettant le passage d'un fluide pour le refroidissement d'un appareil électrique disposé à l'intérieur de la virole 1.

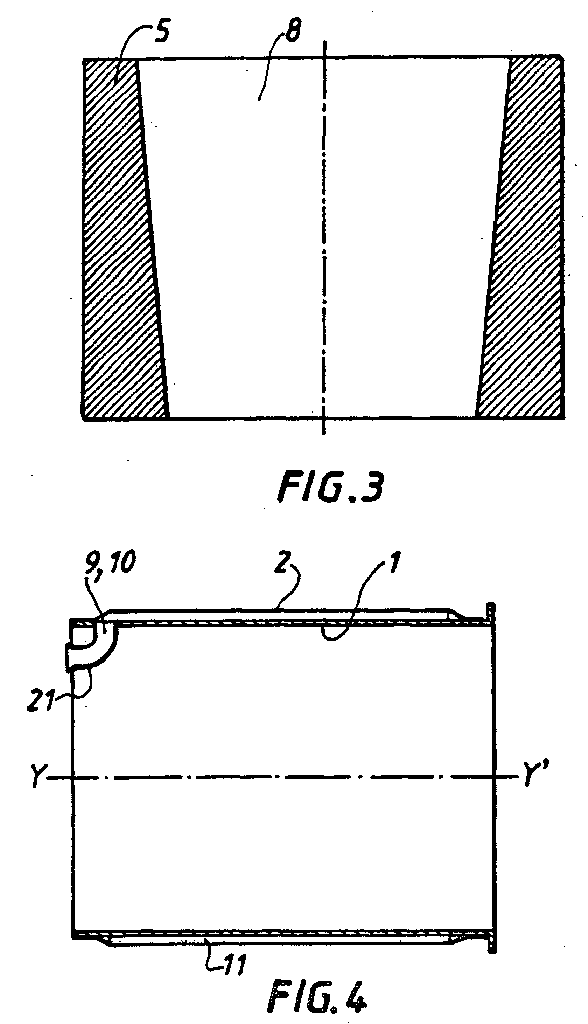

La figure 3 illustre une vue en coupe transversale de la cloche 5 destinée à être montée sur les deux demi-matrices 4a, 4b. L'évidement intérieur 8 de la cloche 5 est complémentaire du volume formé par les deux demi-matrices 4a, 4b fixées l'une contre l'autre. La cloche 5 est ouverte à l'une au moins de ces extrémités pour permettre l'introduction de la virole 1 à l'intérieur de la cloche 5. Cette cloche 5 sert de pièce de maintient en position des deux demi-matrices 4a, 4b pendant l'opération de déformation de l'enceinte extérieure 2, et pendant l'emmanchement de la virole 1 à l'intérieur de l'enceinte extérieure 2 après déformation. Les formes tronconiques du moule 4a, 4b et de la cloche 5 permettent le blocage des deux demi-matrices par coulissement de la cloche 5 sur le moule 4a, 4b.

La figure 4 illustre une vue en coupe transversale d'un carter obtenu selon le procédé selon l'invention. Ce carter de refroidissement est destiné à être utilisé pour le refroidissement d'appareils électriques, tels que par exemple des machines tournantes électriques qui ne peuvent être refroidies que par l'intermédiaire d'un fluide de refroidissement. Le fluide de refroidissement utilisé peut être un liquide ou un gaz.

Le carter de refroidissement comporte une virole intérieure thermiquement conductrice 1 et destinée à entourer l'appareil électrique non représentés.

La virole intérieure 1 peut être de différentes formes, et notamment une pièce de révolution présentant un axe de révolution YY'.

Elle peut entourer uniquement la partie à refroidir de l'appareil électrique, ou éventuellement l'ensemble de l'appareil électrique.

Par exemple, dans le cas d'une machine tournante électrique, cette partie à refroidir sera le stator.

En outre, dans le cas de la machine tournante électrique, la forme la plus pratique pour la virole 1 intérieure est une forme sensiblement cylindrique.

Puisque la virole intérieure 1 est destinée à être en contact avec le fluide de refroidissement, elle est de préférence en un matériau non sensible à la corrosion, tel que par exemple un alliage métallique résistant à la corrosion.

Le carter comporte en outre une enceinte extérieure 2 adjacente à la surface extérieure de la virole intérieure 1.

Cette enceinte extérieure 2 comporte une entrée d'alimentation 9 et une sortie d'évacuation 10 pour le fluide de refroidissement. Elle est de préférence également en un matériau résistant à la corrosion.

Le carter comporte enfin un passage 11 pour le fluide de refroidissement, ménagé entre l'entrée 9 et la sortie 10.

La figure 5 illustre une vue en perspective d'un autre mode de réalisation d'une enceinte extérieure 2 d'un carter, réalisé suivant le même procédé selon l'invention.

Dans ce mode de réalisation, l'enceinte extérieure 2 se présente sous la forme d'une pluralité d'ondulations 12 délimitant, avec la virole intérieure 1, le passage 11 du fluide.

Le fluide de refroidissement est alors susceptible d'être en contact thermique avec la virole intérieure 1.

Si la virole 1 est de forme sensiblement cylindrique, le passage 11 créé autour de la virole 1 peut présenter une forme hélicoïdale. Ainsi, le passage 11 s'étend sur toute la surface de la virole 1 et améliore encore la surface d'échange thermique. Le passage ainsi créé se comporte alors comme un serpentin autour de la virole.

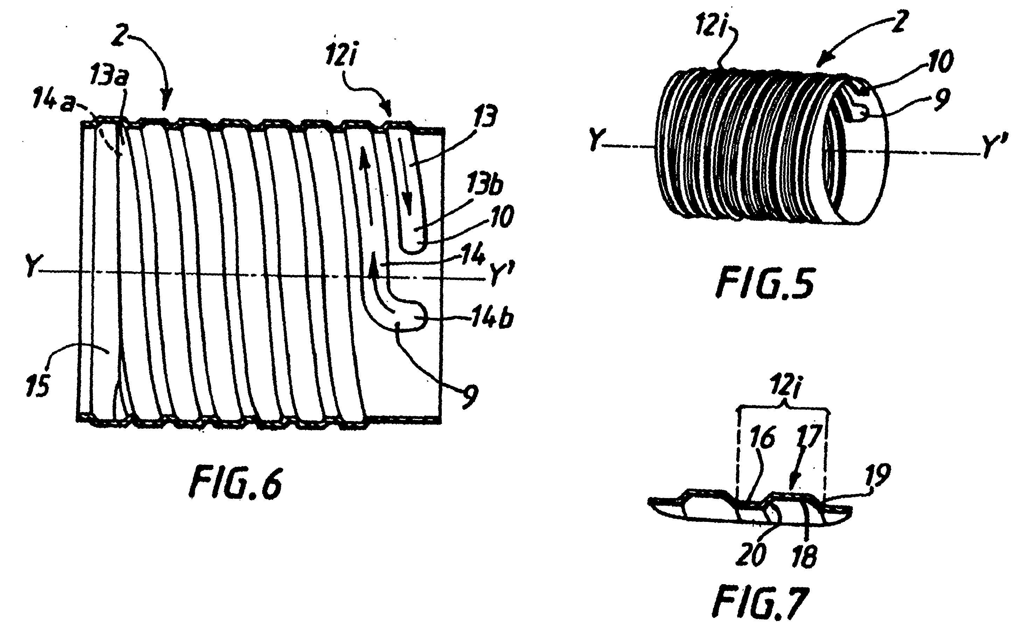

La figure 6 illustre ce mode de réalisation suivant une vue en coupe transversale. Suivant ce mode de réalisation, les ondulations 12i sont telles que le passage 11 s'étend dans un plan sensiblement perpendiculaire à l'axe de révolution YY' de l'enceinte extérieure 2.

Cela étant, on peut prévoir d'autres modes de réalisation où le passage s'étend par exemple sensiblement parallèlement à l'axe de révolution de la virole.

Dans l'exemple représenté sur les figures 5 et 6, on peut voir que le passage s'étend dans un plan perpendiculaire à l'axe de révolution YY' de l'enceinte extérieure 2 et est en outre de forme hélicoïdale et donc sensiblement incliné par rapport à l'axe de révolution YY'.

On peut également prévoir que les ondulations 12i soient telles que le passage s'étend rigoureusement perpendiculairement à l'axe de révolution YY'. Les ondulations 12i sont telles par exemple que le passage 11 comporte deux sections 13, 14 sensiblement parallèles communiquant l'une avec l'autre à l'une de leurs extrémités 13a, 14a, de sorte que l'entrée du fluide 9 et la sortie du fluide 10 se trouvent sensiblement vers la même autre extrémité libre 13b, 14b et opposée desdites sections 13, 14.

Pour que l'entrée 9 et la sortie 10 soient du même côté, le serpentin se présente comme un "double filet", par analogie au filetage d'une vis, le sens de circulation du fluide de refroidissement rentrant étant opposé au sens de circulation du fluide sortant comme indiué par les flèches sur la figure 6.

La communication entre les deux sections 13, 14 peut être obtenue par exemple par l'intermédiaire d'un anneau 15 ou d'un coude, non représenté.

En outre, pour permettre un montage plus facile avec une source de fluide externe non représentée, les deux extrémités libres 13a, 14a des sections 13, 14 du passage 11 sont positionnées proches l'une de l'autre dans un plan sensiblement perpendiculaire à l'axe longitudinal YY' de l'enceinte extérieure 2.

La figure 7 illustre une vue partielle agrandie des ondulations représentées à la figure 6.

Les ondulations 12 peuvent comporter des premières parties 16 en contact avec la surface extérieure de la virole intérieure 1 et des secondes parties 17 distantes de la surface extérieure de la virole intérieure 1, et définissant, avec la virole intérieure 1, le passage du fluide 11.

Suivant un exemple de réalisation, les premières parties 16 peuvent être sensiblement rectilignes et sensiblement parallèles à la surface de la virole intérieure 1.

En outre, les secondes parties 17 peuvent avoir une forme sensiblement en U dont la base 18 est en regard et à distance de la surface extérieure de la virole intérieure 1.

En outre, pour éviter des risques de corrosion de l'enceinte extérieure 2, la largueur de la base 18 des secondes parties 17 est inférieure à la largeur de l'ouverture 19 du U des secondes parties 17, de telle sorte que les bords latéraux 20 du U sont sensiblement inclinés par rapport à la surface extérieure de la virole intérieure 1.

On peut également prévoir que la base 18 des secondes parties 16 soit sensiblement rectiligne et sensiblement parallèle à la surface extérieure de la virole intérieure. Les bords latéraux 20 peuvent être également sensiblement rectilignes.

Ainsi, suivant le mode de réalisation tel que représenté aux figures 5 à 7, les ondulations sont formées d'une succession alternative de premières et secondes parties de longueur respective déterminée.

Dans la mesure où le fluide de refroidissement est en contact thermique avec la virole intérieure 1 et l'enceinte extérieure 2, on peut prévoir que ces dernières sont en un matériau sensiblement identique, tel que notamment un alliage métallique résistant à la corrosion.

Cela étant, autant il est nécessaire que la virole intérieure soit thermiquement conductrice, autant il n'est pas indispensable que l'enceinte extérieure soit en un matériau thermiquement conducteur.

Pour obtenir une bonne étanchéité au niveau de l'entrée 9 d'alimentation et de la sortie 10 d'évacuation, ces dernières peuvent communiquer avec une source de fluide externe, non représentée, par l'intermédiaire d'un canal coudé 21, tel que représenté à la figure 4, monté à l'intérieur de la virole intérieure 1.

Outre le fait qu'un tel carter permette d'obtenir un débit de circulation du fluide de refroidissement minimum qui permet d'augmenter le temps de passage du fluide de refroidissement tout en assurant un bon échange convectif entre le fluide et les parois, les ondulations 12i ont pour fonction supplémentaire de rigidifier l'enceinte extérieure 2 et permette ainsi de réduire son épaisseur tout en gardant la même résistance mécanique à la déformation.

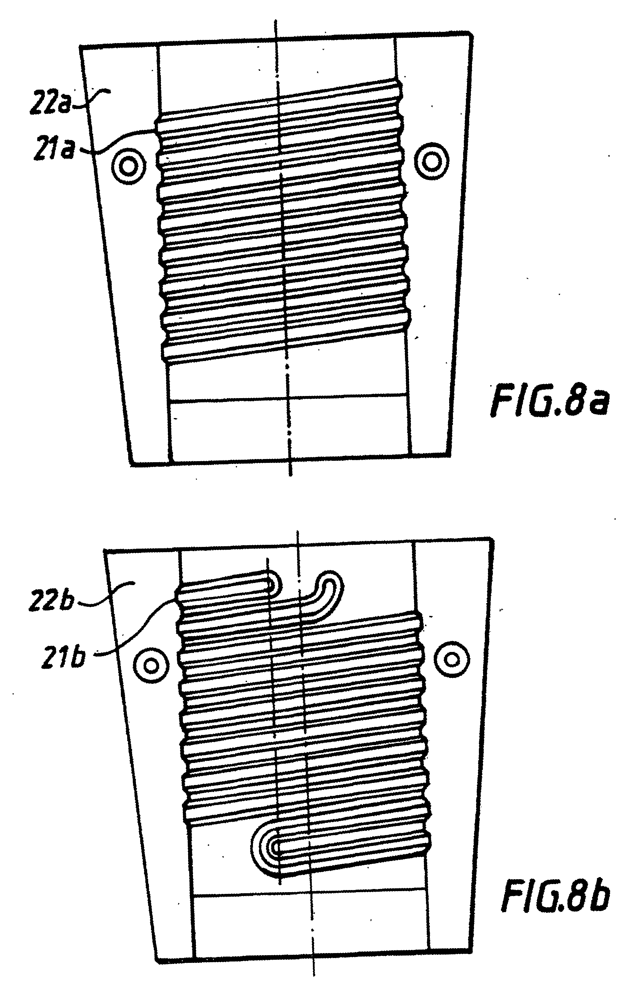

Les figures 8a et 8b illustrent respectivement les profils 21a, 21b des faces latérales internes de chaque demi-matrice 22a, 22b du moule utilisé par le procédé selon l'invention, permettant d'obtenir l'enceinte extérieure 2 telle qu'illustrée aux figures 5 et 6.

## Revendications

1. Procédé de fabrication d'un échangeur thermique du type comportant une virole intérieure (1) thermiquement conductrice destinée à entourer un appareil à réguler en température et une enceinte extérieure (2) adjacente à la surface extérieure de la virole (1), la virole intérieure (1) et l'enceinte extérieure (2) définissant un passage étanche pour un fluide, **caractérisé en ce qu'**il consiste
- à enserrer l'enceinte extérieure (2) à l'intérieur d'un moule (4a, 4b) comportant une paroi intérieure de profil (6a, 6b) complémentaire de celui de l'enceinte extérieure (2) ; et
- à emmancher à force la virole (1) à l'intérieur de l'enceinte extérieure (2) ; l'enceinte extérieure (2) étant maintenue à l'intérieur du moule (4a, 4b) enserrant l'enceinte (2) pendant l'emmanchement de la virole (1) à l'intérieur de l'enceinte (2).

2. Procédé selon la revendication 1, **caractérisé en ce que** pour obtenir une enceinte extérieure (2) de même profil que le profil (6a, 6b) intérieur du moule (4a, 4b), il consiste à déformer l'enceinte extérieure (2) sous l'action d'une pression uniformément répartie sur la face interne de l'enceinte extérieure (2) pour lui donner le profil déterminé par le profil (6a, 6b) interne du moule (4a, 4b) enserrant l'enceinte extérieure (2).

3. Procédé selon la revendication 2, **caractérisé en ce qu'**il consiste pour déformer l'enceinte extérieure (2), à appliquer provisoirement contre la face intérieure de l'enceinte (2), un élément en matériau expansible, de volume initial déterminé, suffisamment rigide pour pouvoir déformer l'enceinte extérieure (2), et suffisamment élastique pour pouvoir subir une déformation plastique sous l'action de la pression exercée uniformément à l'intérieur de l'élément ; l'élément reprenant son volume initial quand la pression n'est plus exercée à l'intérieur de l'élément.

4. Procédé selon les revendications 1 et 2, **caractérisé en ce qu'**il consiste à utiliser un même outillage (3) pour la déformation de l'enceinte extérieure (2) et pour l'emmanchement à force de la virole (1) à l'intérieur de l'enceinte extérieure (2).

5. Outillage (3) pour la mise en oeuvre du procédé selon l'une quelconque des revendications 1 à 4, **caractérisé en ce qu'**il comporte un moule formé de deux demi-matrices (4a, 4b) dont les faces latérales intérieures (6a, 6b) présentent un profil déterminé complémentaire de celui de l'enceinte extérieure (2), et une pièce (5) rapportée serrée sur l'extérieur du moule (4a, 4b) épousant la forme extérieure du moule (4a, 4b) et ouverte à au moins une de ses extrémités.

6. Outillage (3) selon la revendication 5, **caractérisé en ce que** le moule (4a, 4b) a une forme extérieure tronconique et **en ce qu'**il est recouvert d'une cloche (5) comportant un évidement (8) de forme complémentaire à celle du moule (4a, 4b), permettant par coulissement de la cloche (5) sur le moule (4a, 4b) de bloquer serrées les deux demi-matrices (4a et 4b) du moule autour de l'enceinte extérieure (2).

7. Utilisation du procédé tel que défini dans l'une quelconque des revendications 1 à 4 pour la fabrication d'une machine électrique tournante comportant un rotor, un stator et un carter entourant le stator, le carter comportant :
- une virole intérieure (1) thermiquement conductrice et destinée à entourer l'appareil électrique ;
- - une enceinte extérieure (2) réalisée dans une paroi mince ne supportant pas d'effort axial et ayant subie une déformation plastique, adjacente à la surface extérieure de la virole intérieure (1) ;
- un passage étanche (11) pour un fluide, formé par l'espace séparant l'enceinte extérieure (2) et la virole (1) et comportant une entrée d'alimentation (9) et une sortie d'évacuation (10) pour le fluide ; le fluide de refroidissement étant susceptible d'être en contact thermique avec la virole intérieure (1).

8. Utilisation selon la revendication 7, **caractérisée en ce que** l'enceinte extérieure (2) se présente sous la forme d'une pluralité d'ondulations (12i) formant avec la virole intérieure (1) le passage (11).

9. Utilisation selon la revendication 8, **caractérisée en ce que** la virole (1) est une pièce de révolution.

10. Utilisation selon la revendication 8, **caractérisée en ce que** les ondulations (12i) sont telles que le passage (11) s'étend dans un plan sensiblement perpendiculaire à l'axe de révolution de la virole.

11. Utilisation selon l'une quelconque des revendications 7 à 10, **caractérisée en ce que** la virole (1) est de forme sensiblement cylindrique.

12. Utilisation selon l'une quelconque des revendications 7 à 11, **caractérisée en ce que** le passage (11) est de forme hélicoïdale.

13. Utilisation selon la revendication 8, **caractérisée en ce que** les ondulations (12i) sont ménagées de manière telle que le passage (11) comporte deux sections (13, 14) sensiblement parallèles communiquant l'une avec l'autre à l'une de leurs extrémités (13a, 14a), de sorte que l'entrée (9) de fluide et la sortie de fluide (10) se trouvent sensiblement vers la même autre extrémité (13b et 14b) libre opposée desdites sections (13, 14).

14. Utilisation selon la revendication 13, **caractérisée en ce que** les deux sections de passage (13, 14) communiquent l'une avec l'autre par l'intermédiaire d'un anneau (15).

15. Utilisation selon la revendication 13, **caractérisée en ce que** les deux sections (13, 14) de passage (11) communiquent l'une avec l'autre par l'intermédiaire d'un coude (21).

16. Utilisation selon l'une quelconque des revendications 13 à 15, **caractérisée en ce que** les deux extrémités libres (13, 14) des sections du passage (11) sont proches l'une de l'autre dans un plan sensiblement perpendiculaire à l'axe longitudinal de l'enceinte extérieure (2).

17. Utilisation selon l'une quelconque des revendications 7 à 16, **caractérisée en ce que** l'entrée (9) et/ou la sortie (10) de fluide communiquent avec une source de fluide externe par l'intermédiaire d'un canal coudé, monté à l'intérieur de la virole intérieure (1).

18. Utilisation selon l'une quelconque des revendications 7 à 17, **caractérisée en ce que** l'enceinte extérieure (2), une fois positionnée adjacente à la virole intérieure (1), est fixée rigidement à cette dernière par soudage étanche à ses deux extrémités.

19. Utilisation selon l'une quelconque des revendications 7 à 18, **caractérisée en ce que** les ondulations (12i) comportent :
- des premières parties (16) en contact avec la surface de la virole intérieure (1) ; et
- des secondes parties (17) distantes de la surface de la virole (1) et définissant le passage (11).

20. Utilisation selon la revendication 19, **caractérisée en ce que** les premières parties (16) sont sensiblement rectilignes et sensiblement parallèles à la surface de la virole (1).

21. Utilisation selon la revendication 19 ou 20, **caractérisée en ce que** les secondes parties (17) ont une forme sensiblement en U, dont la base (18) est en regard et à distance de la surface de la virole (1), et présente une largeur inférieure à celle de l'ouverture du U.

22. Utilisation selon la revendication 21, **caractérisée en ce que** la base (18) du U est sensiblement rectiligne et sensiblement parallèle à la surface de la virole (1).

23. Utilisation selon la revendication 21 ou 22, **caractérisée en ce que** les bords latéraux (20) du U sont sensiblement rectilignes.

24. Utilisation selon l'une quelconque des revendications 7 à 23, **caractérisée en ce que** la virole (1) et l'enceinte extérieure (2) sont en un même matériau tel que résistant à la corrosion.

25. Utilisation selon la revendication 24, **caractérisée en ce que** le matériau est un alliage métallique.

26. Utilisation selon l'une quelconque des revendications 7 à 25, **caractérisée en ce que** le fluide de refroidissement est un liquide.

27. Utilisation selon l'une quelconque des revendications 7 à 25, **caractérisée en ce que** le fluide de refroidissement est un gaz.

## Patentansprüche

1. Verfahren zur Herstellung eines Wärmeaustauschers mit einem wärmeleitenden inneren Mantel (1), der dazu bestimmt ist, einen in der Temperatur zu regelnden Apparat aufzunehmen, und einer äußeren Hülle (2), die sich an die äußere Oberfläche des Mantels (1) anschließt, wobei der innere Mantel (1) und die äußere Hülle (2) einen dichten Kanal für ein Fluid definieren, **dadurch gekennzeichnet, daß** es besteht aus
- Einspannen der äußeren Hülle (2) in das Innere einer Form (4a, 4b), die eine untere Wand mit einem zu dem Profil der äußeren Hülle (2) komplementären Profil (6a, 6b) aufweist, und
- Einpressen des Mantels (1) in das Innere der äußeren Hülle (2), wobei die äußere Hülle (2) während des Einpressens des Mantels (1) in das Innere der Hülle (2) so in der Form (4a, 4b) gehalten ist, daß die Hülle (2) geklemmt wird.

2. Verfahren nach Anspruch 1, **dadurch gekennzeichnet, daß** es, um eine äußere Hülle (2) mit dem gleichen Profil wie das innere Profil (6a, 6b) der Form (4a, 4b) zu erhalten, darin besteht, daß die äußere Hülle (2) unter der Wirkung eines gleichförmig auf der Innenfläche der äußeren Hülle (2) verteilten Druckes deformiert wird, um ihr das Profil zu geben, das durch das innere Profil der die äußere Hülle (2) einspannenden Form (4a, 4b) definiert ist.

3. Verfahren nach Anspruch 2, **dadurch gekennzeichnet, daß** es, um die äußere Hülle (2) zu deformieren, darin besteht, daß gegen die Innenfläche der Hülle (2) provisorisch ein Element aus expandierbarem Material mit bestimmtem Anfangsvolumen angedrückt wird, das hinreichend steif ist, um die äußere Hülle (2) zu deformieren, und das hinreichend elastisch ist, damit es unter der Wirkung des gleichförmig auf das Innere des Elements ausgeübten Druckes eine plastische Verformung erfahren kann, wobei das Element wieder sein Anfangsvolumen annimmt, wenn der Druck nicht mehr auf das Innere des Elements ausgeübt wird.

4. Verfahren nach den Ansprüchen 1 und 2, **dadurch gekennzeichnet, daß** es darin besteht, daß dasselbe Werkzeug (3) für die Deformation der äußeren Hülle (2) und für das Einpressen des Mantels (1) in das Innere der äußeren Hülle (2) verwendet wird.

5. Werkzeug (3) zur Durchführung des Verfahrens nach einem der Ansprüche 1 bis 4, **dadurch gekennzeichnet, daß** es eine Form aufweist, die aus zwei Halbmatrizen (4a, 4b) gebildet ist, deren seitliche innere Flächen (6a, 6b) ein bestimmtes Profil aufweisen, das zu dem Profil der äußeren Hülle (2) komplementär ist, sowie ein aufgesetztes Teil (5), das gegen die Außenseite der Form (4a, 4b) gespannt ist und sich der äußeren Kontur der Form (4a, 4b) anpaßt und an zumindest einem seiner Enden offen ist.

6. Werkzeug (3) nach Anspruch 5, **dadurch gekennzeichnet, daß** die Form (4a, 4b) eine kegelstumpfförmige äußere Gestalt hat und von einer Glocke (5) umschlossen ist, die eine Höhlung (8) mit einer zu der Gestalt der Form (4a, 4b) komplementären Form hat und die es durch Verschieben der Glocke (5) auf der Form (4a, 4b) gestattet, die beiden Halbmatrizen (4a, 4b) der Form klemmend um die äußere Hülle (2) herum zu fixieren.

7. Verwendung des Verfahrens nach einem der Ansprüche 1 bis 4, für die Herstellung einer rotierenden elektrischen Maschine mit einem Rotor, einem Stator und einem den Stator umgebenden Gehäuse, wobei das Gehäuse aufweist:
- einen wärmeleitenden inneren Mantel (1), der dazu bestimmt ist, den elektrischen Apparat zu umschließen,
- eine äußere Hülle (2), die sich an die äußere Oberfläche des inneren Mantels (1) anschließt und die als dünne Wand ausgebildet ist, die keine Axialkräfte aufnimmt und die einer plastischen Verformung unterzogen worden ist,
- einen dichten Kanal (11) für ein Fluid, der gebildet ist durch den Zwischenräum zwischen der äußeren Hülle (2) und dem Mantel (1) und der einen Einlaß (9) zur Zufuhr des Fluids und einen Auslaß (10) zur Ableitung des Fluids aufweist, wobei das Kühlfluid mit dem inneren Mantel (1) in thermischem Kontakt stehen kann.

8. Verwendung nach Anspruch 7, **dadurch gekennzeichnet, daß** die äußere Hülle (2) die Form mehrerer Wellen (12i) hat, die mit dem inneren Mantel (1) den Kanal (11) bilden.

9. Verwendung nach Anspruch 8, **dadurch gekennzeichnet, daß** der Mantel (1) ein Rotationskörper ist.

10. Verwendung nach Anspruch 8, **dadurch gekennzeichnet, daß** die Wellen (12i) von der Art sind, daß der Kanal (11) in einer zur Rotationsachse des Mantels im wesentlichen rechtwinkligen Ebene verläuft.

11. Verwendung nach einem der Ansprüche 7 bis 10, **dadurch gekennzeichnet, daß** der Mantel (1) eine im wesentlichen zylindrische Form hat.

12. Verwendung nach einem der Ansprüche 7 bis 11, **dadurch gekennzeichnet, daß** der Kanal (11) schraubenförmig ist.

13. Verwendung nach Anspruch 8, **dadurch gekennzeichnet, daß** die Wellen (12i) so ausgebildet sind, daß der Kanal (11) zwei im wesentlichen parallele Abschnitte (13, 14) aufweist, die an einem ihrer Enden (13a, 14a) so miteinander verbunden sind, daß der Einlaß (9) für das Fluid und der Auslaß (10) für das Fluid sich im wesentlichen an demselben anderen freien gegenüberliegenden Ende (13b und 14b) der Abschnitte (13, 14) befinden.

14. Verwendung nach Anspruch 13, **dadurch gekennzeichnet, daß** die beiden Abschnitte (13, 14) des Kanals über einen Ring (15) miteinander in Verbindung stehen.

15. Verwendung nach Anspruch 13, **dadurch gekennzeichnet, daß** die beiden Abschnitte (13, 14) des Kanals (11) über ein Bogenstück (21) miteinander in Verbindung stehen.

16. Verwendung nach einem der Ansprüche 13 bis 15, **dadurch gekennzeichnet, daß** die beiden freien Enden (13, 14) der Abschnitte des Kanals (11) einander in einer Ebene im wesentlichen rechtwinklig zur Längsachse der äußeren Hülle (2) benachbart sind.

17. Verwendung nach einem der Ansprüche 7 bis 16, **dadurch gekennzeichnet, daß** der Einlaß (9) und/oder der Auslaß (10) für das Fluid über einen gekrümmten Kanal, der im Inneren des inneren Mantels (1) montiert ist, mit einer externen Fluidquelle in Verbindung stehen.

18. Verwendung nach einem der Ansprüche 7 bis 17, **dadurch gekennzeichnet, daß** die äußere Hülle (2), nachdem sie einmal angrenzend an den inneren Mantel (1) positioniert worden ist, durch dichte Schweißung an ihren beiden Enden starr an dem letzteren befestigt ist.

19. Verwendung nach einem der Ansprüche 7 bis 18, **dadurch gekennzeichnet, daß** die Wellen (12i) aufweisen:
- erste Teile (16), die mit der Oberfläche des inneren Mantels (1) in Berührung stehen, und
- zweite Teile (17), die von der Oberfläche des Mantels (1) entfernt liegen und den Kanal (11) definieren.

20. Verwendung nach Anspruch 19, **dadurch gekennzeichnet, daß** die ersten Teile (16) im wesentlichen gerade und im wesentlichen parallel zu der Oberfläche des Mantels (1) sind.

21. Verwendung nach Anspruch 19 oder 20, **dadurch gekennzeichnet, daß** die zweiten Teile (17) im wesentlichen die Gestalt eines U haben, dessen Basis (18) der Oberfläche des Mantels (1) in Abstand gegenüberliegt und eine Breite hat, die kleiner ist als diejenige der Öffnung des U.

22. Verwendung nach Anspruch 21, **dadurch gekennzeichnet, daß** die Basis (18) des U im wesentlichen gerade und im wesentlichen parallel zur Oberfläche des Mantels (1) ist.

23. Verwendung nach Anspruch 21 oder 22, **dadurch gekennzeichnet, daß** die seitlichen Schenkel (20) des U im wesentlichen gerade sind.

24. Verwendung nach einem der Ansprüche 7 bis 23, **dadurch gekennzeichnet, daß** der Mantel (1) und die äußere Hülle (2) aus demselben Material, etwa einem korrosionsfesten Material bestehen.

25. Verwendung nach Anspruch 24, **dadurch gekennzeichnet, daß** das Material eine Metallegierung ist.

26. Verwendung nach einem der Ansprüche 7 bis 25, **dadurch gekennzeichnet, daß** das Kühlfluid eine Flüssigkeit ist.

27. Verwendung nach einem der Ansprüche 7 bis 25, **dadurch gekennzeichnet, daß** das Kühlfluid ein Gas ist.

## Claims

1. Process for production of a heat exchanger of a type comprising an inner, thermally conductive ferrule (1) intended to surround a device to be temperature-controlled, and an outer enclosure (2) adjacent to the external surface of the ferrule (1), the inner ferrule (1) and the outer enclosure (2) defining a sealed passage for a fluid, **characterised in that** it comprises:
- clamping the outer enclosure (2) inside a mould (4a, 4b) comprising an inner wall (6a, 6b) of profile complementary to that of the outer enclosure (2); and
- press-fitting the ferrule (1) by force inside the outer enclosure (2); the outer enclosure (2) being held inside the mould (4a, 4b) clamping the enclosure (2) during the press-fitting of the ferrule (1) inside the enclosure (2).

2. Process according to claim 1, **characterised in that** in order to obtain an outer enclosure (2) of the same profile as the inner profile (6a, 6b) of the mould (4a, 4b), the outer enclosure (2) is deformed under the action of a pressure uniformly distributed over the internal face of the outer enclosure (2) to give it a profile determined by the inner profile (6a, 6b) of the mould (4a, 4b) clamping the outer enclosure (2).

3. Process according to claim 2, **characterised in that** to deform the outer enclosure (2), against the internal face of the enclosure (2) is provisionally applied an element of expandable material of particular initial volume which is sufficiently rigid to be able to deform the outer enclosure (2) and sufficiently elastic to be able to undergo a plastic deformation under the action of the pressure exerted uniformly inside the element; the element resuming its initial volume when the pressure is no longer exerted inside the element.

4. Process according to claims 1 and 2, **characterised in that** it consists of using the same tooling (3) to deform the outer enclosure (2) and to press-fit the ferrule (1) by force inside the outer enclosure (2).

5. Tooling (3) for implementation of the process according to any of claims 1 to 4, **characterised in that** it comprises a mould formed from two half-dies (4a, 4b), the inner side faces (6a, 6b) of which have a particular profile complementary to that of the outer enclosure (2), and an attached part (5) fixed on the exterior of the mould (4a, 4b) and following the outer form of the mould (4a, 4b) and open on at least one of its ends.

6. Tooling (3) according to claim 5, **characterised in that** the mould (4a, 4b) has an outer frustoconical form and **in that** it is covered by a hood (5) with a recess (8) of form complementary to that of the mould (4a, 4b) allowing, by sliding of the hood (5) over the mould (4a, 4b), the tight blocking of the two half-dies (4a, 4b) of the mould around the outer enclosure (2).

7. Use of the process as defined in any of claims 1 to 4 for production of an electrical rotating machine comprising a rotor, a stator and a housing surrounding the stator, the housing comprising:
- an inner, thermally conductive ferrule (1) intended to surround the electrical device;
- an outer enclosure (2), produced of a thin wall not bearing any axial force and having undergone plastic deformation, adjacent to the outer surface of the inner ferrule (1);
- a sealed passage (11) for a fluid formed by the space separating the outer enclosure (2) and the inner ferrule (1) and comprising a supply inlet (9) and a discharge outlet (10) for the fluid; the cooling fluid being able to be in thermal contact with the inner ferrule (1).

8. Use according to claim 7, **characterised in that** the outer enclosure (2) takes the form of a plurality of undulations (12i) forming with the inner ferrule (1) the passage (11).

9. Use according to claim 8, **characterised in that** ferrule (1) is a rotating part.

10. Use according to claim 8, **characterised in that** the undulations (12i) are such that the passage (11) extends in a plane approximately perpendicular to the axis of rotation of the ferrule.

11. Use according to any of claims 7 to 10, **characterised in that** the ferrule (1) is of approximately cylindrical form.

12. Use according to any of claims 7 to 11, **characterised in that** the passage (11) is of helicoidal form.

13. Use according to claim 8, **characterised in that** the undulations (12i) are arranged such that the passage (11) comprises two approximately parallel sections (13, 14) communicating with each other at one of their ends (13a, 14a) such that the fluid inlet (9) and the fluid outlet (10) lie approximately at the same other free end (13b and 14b) opposite the said sections (13, 14).

14. Use according to claim 13, **characterised in that** the two passage sections (13, 14) communicate with each other via a ring (15).

15. Use according to claim 13, **characterised in that** the two sections (13, 14) of passage (11) communicate with each other via an elbow (21).

16. Use according to any of claims 13 to 15, **characterised in that** the two free ends (13, 14) of the sections of the passage (11) are close to each other in a plane approximately perpendicular to the longitudinal axis of the outer enclosure (2).

17. Use according to any of claims 7 to 16, **characterised in that** the fluid inlet (9) and/or outlet (10) communicate with an external fluid source via an elbowed channel mounted inside the inner ferrule (1).

18. Use according to any of claims 7 to 17, **characterised in that** the outer enclosure (2), once positioned next to the inner ferrule (1), is fixed rigidly to the latter by sealed welding at both ends.

19. Use according to.any of claims 7 to 18, **characterised in that** the undulations (12i) comprise:
- first parts (16) in contact with the surface of the inner ferrule (1); and
- second parts (17) remote from the surface of the ferrule (1) and defining the passage (11).

20. Use according to claim 19, **characterised in that** the first parts (16) are approximately rectilinear and approximately parallel to the surface of the ferrule (1).

21. Use according to claim 19 or 20, **characterised in that** the second parts (17) have an approximate U-shape, the base (18) of which is opposite and remote from the surface of the ferrule (1) and has a width less than that of the U opening.

22. Use according to claim 21, **characterised in that** the base (18) of the U is approximately rectilinear and approximately parallel to the surface of the ferrule (1).

23. Use according to claim 21 or 22, **characterised in that** the side edges (20) of the U are approximately rectilinear.

24. Use according to any of claims 7 to 23, **characterised in that** the ferrule (1) and the outer enclosure (2) are made of the same material, such as corrosion-resistant.

25. Use according to claim 24, **characterised in that** the material is a metal alloy.

26. Use according to any of claims 7 to 25, **characterised in that** the cooling fluid is a liquid.

27. Use according to any of claims 7 to 25, **characterised in that** the cooling fluid is a gas.
